# FASCICULE DE BREVET EUROPEEN

(11) **EP 3 728 920 B1**
(45) Date de publication et mention de la délivrance du brevet: **06.09.2023**
(21) Numéro de dépôt: 18842784.3
(22) Date de dépôt: 20.12.2018
(51) Int. Cl.: F16L 3/227, G01N 35/10, B01L 99/00

(54) **BRIDE POUR DISPOSITIF D'ANALYSES BIOLOGIQUES**
KLEMME FÜR VORRICHTUNG ZUR BIOLOGISCHEN ANALYSE
CLAMP FOR BIOLOGICAL ANALYSIS DEVICE

(30) Priorité: 22.12.2017 FR 1762954
(43) Date de publication de la demande: 28.10.2020
(73) Titulaire: Horiba ABX SAS, 34184 Montpellier Cedex 4 (FR)
(72) Inventeur: ALESSIO, André, 34570 Pignan (FR)
(74) Mandataire: Cabinet Netter
(86) Numéro de dépôt international: PCT/FR2018/053431
(87) Numéro de publication internationale: WO 2019/122729

(56) Documents cités:
- EP-A2- 1 344 968
- DE-U1-202010 017 007
- DE-U1-202012 002 894
- FR-A1- 2 248 432
- GB-A- 2 545 695
- US-A1- 2017 130 873

## Description

L'invention concerne le domaine des dispositifs d'analyses biologiques. Les dispositifs d'analyse biologiques comprennent des nombreux tuyaux pour faire circuler de l'eau osmosée, des réactifs, des fluides biologiques et/ou des mélanges de ces éléments.

Ces tuyaux sont classiquement montés sur des vannes, par exemple des vannes 2 ou 3 voies, généralement disposées les unes à côté des autres sur un barreau de vannes. Dans le cas de vannes contiguës, l'espace libre pour le passage de tuyaux entre vannes est de l'ordre de 4mm.

Pour maintenir les tuyaux en place sur les vannes, des manchons sont en général montés sur les tuyaux au moyen de pinces pneumatiques. Le montage des manchons est peu pratique, et crée un risque de trouble musculo squelettique. De plus, le risque de fuite reste présent, du fait de la complexité du montage, du dimensionnement des manchons et de la coupe en biais des tuyaux et des manchons.

Une solution a été développée pour pallier ces problèmes et proposée dans la demande de brevet publiée sous le numéro FR 3 020 438 A1. Cette solution consiste en un système de retenue de tubulure en deux parties qui peuvent être attachées pour venir exercer une force sur la tubulure et la serrer contre une canule.

Ce dispositif est complexe et peu pratique à mettre en oeuvre.

Le document GB 2 545 695 A divulgue un dispositif de séparation de câbles d'un avion qui comprend plusieurs portions agencées pour former, dans un état fermé du dispositif, des ouvertures destinées à recevoir les câbles.

L'invention vient améliorer la situation. A cet effet, l'invention propose une bride pour dispositif d'analyses biologiques qui comprend un corps en plastique qui comprend une base à laquelle sont reliées une première branche externe, une deuxième branche externe et une branche centrale, la première branche externe présentant une longueur plus importante que la deuxième branche externe et lesdites première branche externe et deuxième branche externe étant agencées de manière à s'engager mutuellement dans un état fermé de la bride.

La première branche externe et la deuxième branche externe présentent chacune un premier évidement et un deuxième évidement sur la portion orientée vers l'intérieur du corps, le premier évidement étant le plus éloigné de la base, et la branche centrale présente deux paires d'évidements chacune disposée d'un côté et comprenant un premier évidement et un deuxième évidement, homologues respectivement du premier évidement et du deuxième évidement de la première branche externe et de la deuxième branche externe, les deuxièmes évidements étant dimensionnés de sorte que la première branche externe et la deuxième branche externe viennent sensiblement au contact de la branche centrale dans l'état fermé, les premiers évidements définissant alors entre eux deux poches annulaires, chacune propre à brider un tuyau qu'elle reçoit. Certains au moins des premiers évidements comprennent des godrons.

Cette bride est particulièrement avantageuse car elle peut être mise en place très rapidement et simplement dans un dispositif d'analyses biologiques, tout en limitant les efforts pour le faire, et donc en limitant le risque de trouble musculo squelettique. De plus, elle permet de traiter tous les tuyaux montés sur une vanne donnée en une seule fois, ce qui est particulièrement rapide, et peut-être adaptée sur des vannes à deux voies ou plus.

Dans diverses variantes, la bride de l'invention peut présenter une ou plusieurs des caractéristiques suivantes :
- les poches annulaires sont agencées de manière à recevoir des tuyaux présentant des diamètres internes respectifs distincts,
- la première branche externe et la deuxième branche externe comprennent chacune un troisième évidement sur la portion orientée vers l'intérieur du corps, et dans laquelle la branche centrale comprend un évidement d'extrémité homologue desdits troisièmes évidements, de sorte que dans l'état fermé les troisièmes évidements et l'évidement d'extrémité définissent entre eux une troisième poche annulaire propre à brider un tuyau qu'elle reçoit,
- certains au moins des troisièmes évidements et de l'évidement d'extrémité comprennent des godrons,
- la troisième poche annulaire est agencée de manière à recevoir un tuyau présentant un diamètre interne identique ou distinct du diamètre des poches annulaires,
- la première branche externe présente à son extrémité des dents sur la portion orientée vers l'intérieur du corps, et dans laquelle la deuxième branche externe présente à son extrémité des dents sur la portion orientée vers l'extérieur du corps, les dents étant agencées pour s'engager dans l'état fermé, et
- la première branche externe et la deuxième branche externe présente chacune une saillie présentant des rainures respectives, de sorte que la bride peut passer de l'état ouvert à l'état fermé par serrage à la pince au niveau des rainures.

D'autres caractéristiques et avantages de l'invention apparaîtront mieux à la lecture de la description qui suit, tirée d'exemples donnés à titre illustratif et non limitatif, tirés des dessins sur lesquels :
- la figure 1 représente une vue en perspective d'une bride 3 voies selon l'invention dans un état ouvert,
- la figure 2 représente une vue de dessus selon l'axe II-II de la figure 1, et
- la figure 3 représente une vue de dessus pré-clipsée selon l'axe II-II de la figure 1, dans une position entre l'état ouvert et l'état fermé,
- la figure 4 représente une vue de dessus selon l'axe II-II de la figure 1, dans un état fermé, et
- la figure 5 représente une vue en perspective de la bride de la figure 4 en position sur des tuyaux reçus sur une vanne.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

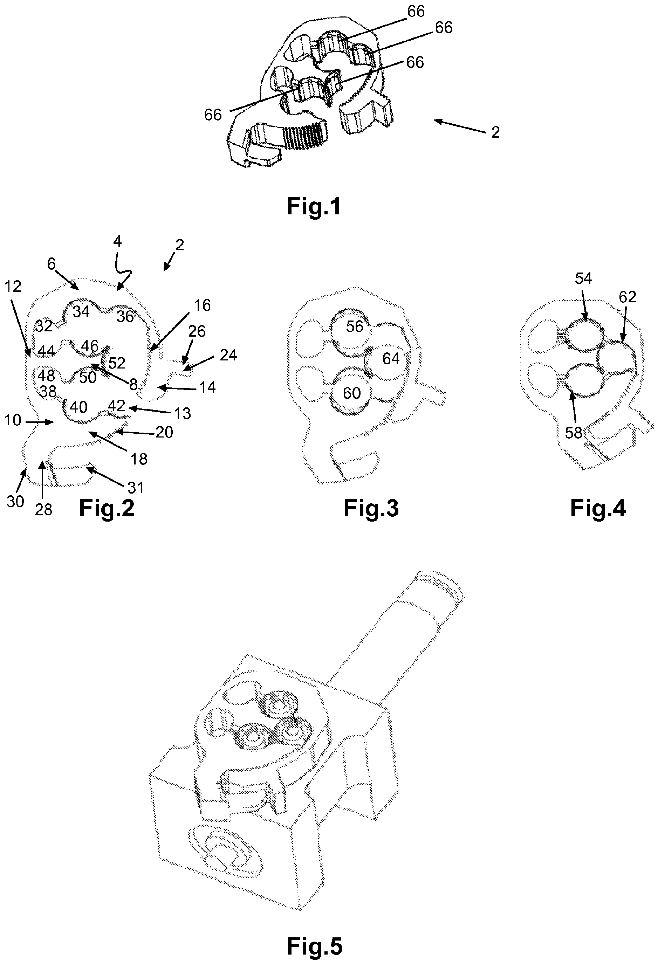

La figure 1 représente une vue en perspective d'une bride 2 selon l'invention dans un état ouvert. La bride 2 comprend un corps 4. Le corps 4 comprend trois branches 6, 8 et 10 qui sont reliées par une base 12. Les branches 6 et 10 sont placées de part et d'autre de la branche 8, de sorte que les branches 6 et 10 seront dans la suite désignées par l'expression « branches externes », et la branche 8 par l'expression « branche centrale ». Dans cet état ouvert, les branches externes 6 et 10 ne se rejoignent pas, de sorte qu'il est possible d'accéder à l'intérieur du corps 4 par une ouverture 13.

Dans l'exemple décrit ici, la bride 2 est réalisée en polyamide 6-6 (nylon). En variante, la bride 2 pourrait être réalisée dans un autre plastique ou en polyoxyméthylène (POM). La bride 2 peut ainsi être réalisée par moulage, par extrusion suivie d'une découpe, ou être produite par un processus de fabrication additive.

Comme on peut le voir sur les figures 1 et 2, la branche externe 6 présente une forme sensiblement en « C », là où la branche centrale 8 présente une forme sensiblement en « I », et la branche externe 10 une forme sensiblement en « J ».

La branche externe 6 présente une extrémité 14 qui est éloignée de la base 12, et est munie sur la face dirigée vers l'intérieur du corps 4 d'une pluralité de dents 16. De manière similaire, la branche externe 10 présente une extrémité 18 qui est éloignée de la base 12, et est munie sur la face dirigée vers l'extérieur du corps 4 d'une pluralité de dents 20.

L'extrémité 14 présente une portion saillante 24, laquelle s'exprime sensiblement perpendiculairement à l'extrémité 14 et est munie d'une pluralité de rainures 26 sur une face éloignée de l'ouverture 13. De manière complémentaire, la branche externe 10 comprend une portion saillante 28 qui s'étend depuis celle-ci et est munie d'une pluralité de rainures 30 sur une face éloignée de l'ouverture 13. A la différence de la portion saillante 24 qui s'étend à partir de l'extrémité 14, la portion saillante 28 s'étend à partir d'une portion de la branche externe 10 qui est plus proche de la base 12 que l'extrémité 18.

Les portions saillantes 24 et 28 coopèrent afin de permettre la fermeture de la bride 2. En effet, les rainures 26 et 30 permettent de rapprocher les portions saillantes 24 et 28 par serrage, par exemple au moyen d'une pince. Au fur et à mesure que les portions saillantes 24 et 28 se rapprochent, les dents 16 de la branche externe 6 et les dents 20 de la branche externe 10 vont progressivement s'engager en fermant l'ouverture 13, comme cela est représenté sur les figures 3 et 4. Dans l'exemple décrit ici, la portion saillante 28 présente un doigt 31 définissant avec l'extrémité 18 une ouverture dont la forme est sensiblement homologue de celle la portion d'extrémité 14 à proximité de l'ouverture 13. Ainsi, une fois la bride 2 fermée, le doigt 31 garantit qu'elle ne peut être ouverte en tirant radialement sur la branche externe 6.

En variante, le maintien à l'état fermé de la bride 2 peut être réalisé différemment, avec ou sans les dents 16 et 20, et/ou avec ou sans les portions saillantes 24 et 28. Par exemple, l'extrémité 14 et l'extrémité 18 peuvent se clipser, être collées, ou coopérer de toute autre manière permettant de fermer l'ouverture 13.

Comme on peut le voir sur les figures 1 et 2, la branche externe 6 et la branche externe 10 comprennent chacune trois évidements référencés 32, 34, 36 pour la branche externe 6, et référencés 38, 40 et 42 pour la branche externe 10. Ces évidements sont réalisés dans la portion des branches externes 6 et 10 qui est tournée vers l'intérieur du corps 4.

Les évidements 32 et 38 ont une forme partiellement ovoïdale qui sera expliquée plus bas. Les évidements 34, 36, 40 et 42 sont tous sensiblement en forme d'arc de cercle en vue de dessus. Dans l'exemple décrit ici, les évidements 32 et 38 sont les plus proches de la base 12. Les évidements 36 et 42 sont les plus éloignés de la base 12 et présentent une forme sensiblement en arc de cercle. Les évidements 34 et 40 sont situés entre les autres évidements et ont une forme quasi demi-circulaire.

La branche centrale 8 comprend également deux paires d'évidements 44 et 46 et 48 et 50 de part et d'autre du « I », ainsi qu'un évidement 52 dans la portion de la branche centrale 8 la plus éloignée de la base 12.

L'évidement 44 (respectivement 48) est sensiblement en regard de l'évidement 32 (respectivement 38), et ces évidements présentent une forme homologue. De même, les évidements 36, 42 et 52 présentent des formes complémentaires.

Ainsi, comme cela est visible sur les figures 3 et 4, lorsque la bride 2 est refermée, les évidements 34 et 46 définissent une première poche 54 bridant un tuyau 56, les évidements 40 et 50 définissent une deuxième poche 58 bridant un tuyau 60, tandis que les évidements 36, 42 et 52 coopèrent pour définir une poche 62 bridant un tuyau 64. Les évidements 32 et 44 d'une part et 38 et 48 d'autre part sont dimensionnés pour offrir une élasticité au corps 4 telle que les poches 54, 58 et 62 viennent brider les tuyaux 56, 60 et 64 de manière sensiblement homogène, ce qui permet d'améliorer l'étanchéité de la bride 2. Dans l'exemple décrit ici, cette étanchéité est encore améliorée par la fourniture de godrons 66 dans chacun des évidements 34, 36, 40, 42, 46, 50 et 52. Ces godrons pourront être omis sur certains de ces évidements ou tous dans certains modes de réalisation.

Dans l'exemple décrit ici, à l'état fermé de la bride 2, les poches 54 et 58 sont capables d'accepter un tuyau dont le diamètre interne est d'environ 1,52mm et le diamètre externe est d'environ 4mm, tandis que la poche 62 est capable d'accepter un tuyau dont le diamètre interne est d'environ 2,06mm et le diamètre externe est également d'environ 4mm. D'une manière générale, la déformation élastique du corps 4 de la bride 2 permet ainsi d'accommoder des tuyaux dont le diamètre varie, tout en assurant un serrage qui garantit l'étanchéité.

En variante, les diamètres pourraient varier, et les poches 54 et 58 pourraient présenter un diamètre différent entre et de celui de la poche 62, ou encore être tous les trois identiques. Pour cela, il suffit de faire varier la taille des évidements 34, 36, 40, 42, 46, 50, et 52, et d'adapter la taille des évidements 32, 38, 44 et 48 afin d'obtenir la souplesse nécessaire pour la déformation élastique du corps 4. La bride 2 peut être adaptée sur une vanne à 2 ou à 3 voies, selon le nombre de poches qui reçoit un tube correspondant. En variante, la poche 62 pourrait être omise en supprimant les évidements qui la définissent, afin de produire une bride adaptée pour une vanne deux voies uniquement.

Dans les modes de réalisation décrits ci-dessus, la première branche externe 6 et la deuxième branche externe 10 viennent au contact de la branche centrale 8 dans l'état fermé. En variante, et selon les tuyaux reçus dans les poches, la première branche externe 6 et la deuxième branche externe 10 pourront venir sensiblement au contact de la branche centrale 8 dans l'état fermé, c'est-à-dire suffisamment proches pour définir les poches et maintenir un ou plusieurs tuyaux avec une étanchéité satisfaisante, mais sans nécessairement qu'il y ait contact physique entre celles-ci.

## Revendications

1. Bride pour dispositif d'analyses biologiques, laquelle comprend un corps en plastique qui comprend une base (12) à laquelle sont reliées une première branche externe (6), une deuxième branche externe (10) et une branche centrale (8),
la première branche externe (6) présentant une longueur plus importante que la deuxième branche externe (10) et lesdites première branche externe (6) et deuxième branche externe (10) étant agencées de manière à s'engager mutuellement dans un état fermé de la bride,
la première branche externe (6) et la deuxième branche externe (10) présentant chacune un premier évidement (34, 40) et un deuxième évidement (32, 38) sur la portion orientée vers l'intérieur du corps (4), le premier évidement (34, 40) étant plus éloigné de la base (12) que le deuxième évidement (32, 38),
la branche centrale (8) présentant deux paires d'évidements (44-46, 48-50) chacune disposée d'un côté et comprenant un premier évidement (46, 50) et un deuxième évidement (44, 48), homologues respectivement du premier évidement (34, 40) et du deuxième évidement (32, 38) de la première branche externe (6) et de la deuxième branche externe (10), les deuxièmes évidements (44, 48) étant dimensionnés de sorte que la première branche externe (6) et la deuxième branche externe (10) viennent sensiblement au contact de la branche centrale (8) dans l'état fermé, les premiers évidements (34-46, 40-50) définissant alors entre eux deux poches annulaires (54, 58), chacune propre à brider un tuyau (56, 60) qu'elle reçoit,
**caractérisée en ce que**
certains au moins des premiers évidements (34, 40, 46, 50) comprennent des godrons (66).

2. Bride selon la revendication 1, dans laquelle les poches annulaires (54, 58) sont agencées de manière à recevoir des tuyaux présentant des diamètres internes respectifs distincts.

3. Bride selon la revendication 1 ou 2, dans laquelle la première branche externe (6) et la deuxième branche externe (10) comprennent chacune un troisième évidement (36, 42) sur la portion orientée vers l'intérieur du corps (4), et dans laquelle la branche centrale (8) comprend un évidement d'extrémité (52) homologue desdits troisièmes évidements (36, 42), de sorte que dans l'état fermé les troisièmes évidements (36, 42) et l'évidement d'extrémité (52) définissent entre eux une troisième poche annulaire (62) propre à brider un tuyau (64) qu'elle reçoit.

4. Bride selon la revendication 3, dans laquelle certains au moins des troisièmes évidements (36, 42) et de l'évidement d'extrémité (52) comprennent des godrons (66).

5. Bride selon la revendication 3 ou 4, dans laquelle la troisième poche annulaire (62) est agencée de manière à recevoir un tuyau présentant un diamètre interne identique ou distinct du diamètre des poches annulaires (54, 58).

6. Bride selon l'une des revendications précédentes, dans laquelle la première branche externe (6) présente à son extrémité des dents (16) sur la portion orientée vers l'intérieur du corps (4), et dans laquelle la deuxième branche externe (10) présente à son extrémité des dents (20) sur la portion orientée vers l'extérieur du corps (4), les dents (16, 20) étant agencées pour s'engager dans l'état fermé.

7. Bride selon la revendication 6, dans laquelle la première branche externe (6) et la deuxième branche externe (10) présente chacune une saillie (24, 28) présentant des rainures (26, 30) respectives, de sorte que la bride (2) peut passer de l'état ouvert à l'état fermé par serrage à la pince au niveau des rainures (26, 30).

## Patentansprüche

1. Klemme für eine Vorrichtung für biologische Analysen, welche einen Körper aus Kunststoff umfasst, das eine Basis (12) umfasst, an der ein erster äußerer Schenkel (6), ein zweiter äußerer Schenkel (10) und ein mittlerer Schenkel (8) angeschlossen sind,
wobei der erste äußere Schenkel (6) eine größere Länge als der zweite äußere Schenkel (10) aufweist, und der erste äußere Schenkel (6) und zweite äußere Schenkel (10) derart angeordnet sind, dass sie in einem geschlossenen Zustand der Klemme ineinander eingreifen,
wobei der erste äußere Schenkel (6) und der zweite äußere Schenkel (10) jeweils eine erste Aussparung (34, 40) und eine zweite Aussparung (32, 38) am Abschnitt aufweisen, der ins Innere des Körpers (4) ausgerichtet ist, wobei die erste Aussparung (34, 40) weiter von der Basis (12) entfernt ist, als die zweite Aussparung (32, 38),
wobei der mittlere Schenkel (8) zwei Aussparungspaare (44-46, 48-50) aufweist, die jeweils auf einer Seite angeordnet sind, und eine erste Aussparung (46, 50) und eine zweite Aussparung (44, 48) umfassen, die jeweils entsprechend zur ersten Aussparung (34, 40) und zur zweiten Aussparung (32, 38) des ersten äußeren Schenkels (6) und des zweiten äußeren Schenkels (10) sind, wobei die zweiten Aussparungen (44, 48) derart bemessen sind, dass der erste äußere Schenkel (6) und der zweite äußere Schenkel (10) im geschlossenen Zustand im Wesentlichen in Kontakt mit dem mittleren Schenkel (8) treten, wobei die ersten Aussparungen (34-46, 40-50) somit zwischen sich zwei ringförmige Taschen (54, 58) definieren, die jeweils imstande sind, einen Schlauch (56, 60), den sie aufnimmt, zu klemmen,
**dadurch gekennzeichnet, dass** mindestens einige der ersten Aussparungen (34, 40, 46, 50) Rippenmuster (66) umfassen.

2. Klemme nach Anspruch 1, wobei die ringförmigen Taschen (54, 58) derart angeordnet sind, dass sie Schläuche aufnehmen, die jeweilige unterschiedliche Innendurchmesser aufweisen.

3. Klemme nach Anspruch 1 oder 2, wobei der erste äußere Schenkel (6) und der zweite äußere Schenkel (10) jeweils eine dritte Aussparung (36, 42) auf dem Abschnitt umfassen, der ins Innere des Körpers (4) ausgerichtet ist, und wobei der mittlere Schenkel (8) eine Endaussparung (52) entsprechend den dritten Aussparungen (36, 42) umfasst, sodass die dritten Aussparungen (36, 42) und die Endaussparung (52) im geschlossenen Zustand zwischen sich eine dritte ringförmige Tasche (62) definieren, die imstande ist, einen Schlauch (64), den sie aufnimmt, zu klemmen.

4. Klemme nach Anspruch 3, wobei mindestens einige der dritten Aussparungen (36, 42) und der Endaussparung (52) Rippenmuster (66) umfassen.

5. Klemme nach Anspruch 3 oder 4, wobei die dritte ringförmige Tasche (62) derart angeordnet ist, dass sie einen Schlauch aufnimmt, der einen Innendurchmesser aufweist, der gleich dem Durchmesser der ringförmigen Taschen (54, 58) ist, oder sich davon unterscheidet.

6. Klemme nach einem der vorstehenden Ansprüche, wobei der erste äußere Schenkel (6) an seinem Ende Zähne (16) auf dem Abschnitt aufweist, der ins Innere des Körpers (4) ausgerichtet ist, und wobei der zweite äußere Schenkel (10) an seinem Ende Zähne (20) auf dem Abschnitt aufweist, der nach außerhalb des Körpers (4) ausgerichtet ist, wobei die Zähne (16, 20) derart angeordnet sind, dass sie im geschlossenen Zustand ineinander eingreifen.

7. Klemme nach Anspruch 6, wobei der erste äußere Schenkel (6) und der zweite äußere Schenkel (10) jeweils einen Vorsprung (24, 28) aufweisen, der jeweilige Rillen (26, 30) aufweist, sodass die Klemme (2) durch Spannen mit der Zange an den Rillen (26, 30) vom offenen Zustand in den geschlossenen Zustand übergehen kann.

## Claims

1. Clamp for a biological analysis device, that comprises a plastic body that comprises a base (12) to which a first outer branch (6), a second outer branch (10), and a central branch (8) are connected,
the first outer branch (6) being longer than the second outer branch (10) and said first outer branch (6) and second outer branch (10) being arranged to engage mutually in a closed state of the clamp,
the first outer branch (6) and the second outer branch (10) each having a first recess (34, 40) and a second recess (32, 38) on the portion oriented towards the inside of the body (4), the first recess (34, 40) being farther from the base (12),
the central branch (8) has two pairs of recesses (44-46; 48-50) each disposed on one side and comprising a first recess (46; 50) and a second recess (44; 48), which are homologous with the first recess (34; 40) and the second recess (32; 38), respectively, of the first outer branch (6) and the second outer branch (10), the second recesses (44; 48) being dimensioned so that the first outer branch (6) and the second outer branch (10) come substantially into contact with the central branch (8) in the closed state, the first recesses (34-46; 40-50) then defining therebetween two annular pockets (54; 58), each suitable for clamping a pipe (56; 60) which it receives,
**characterised in that** at least some of the first recesses (34, 46, 40, 50) comprise gadroons (66).

2. Clamp according to claim 1, wherein the annular pockets (54; 58) are arranged so as to receive pipes having different respective inner diameters.

3. Clamp according to claim 1 or 2, wherein the first outer branch (6) and the second outer branch (10) each comprise a third recess (36; 42) on the portion oriented towards the inside of the body (4), and wherein the central branch (8) comprises an end recess (52) homologous with said third recesses (36; 42), such that, in the closed state, the third recesses (36; 42) and the end recess (52) define therebetween a third annular pocket (62) suitable for clamping a pipe (64) received thereby.

4. Clamp according to claim 3, wherein at least some of the third recesses (36; 42) and the end recess (52) comprise gadroons.

5. Clamp according to claim 3 or 4, wherein the third annular pocket (62) is arranged so as to receive a pipe having an inner diameter identical to or different from the diameter of the annular pockets (54; 58).

6. Clamp according to one of the preceding claims, wherein the first outer branch (6) has at the end thereof teeth (16) on the portion oriented towards the inside of the body (4), and wherein the second outer branch (10) has at the end thereof teeth (20) on the portion oriented towards the outside of the body (4), the teeth (16; 20) being arranged to engage in the closed state.

7. Clamp according to claim 6, wherein the first outer branch (6) and the second outer branch (10) each has a projection (24; 28) having respective grooves (26; 30), such that the clamp (2) can switch from the open state to the closed state by clamping with the clamp at the level of the grooves (26; 30).
